# EUROPEAN PATENT APPLICATION

(11) **EP 4 528 481 A1**
(43) Date of publication of application: **26.03.2025**
(21) Application number: 22948466.2
(22) Date of filing: 30.06.2022
(51) Int. Cl.: G06F 8/65, G06F 8/71

(54) **NODE UPGRADING METHOD AND APPARATUS**

(71) Applicant: Shenzhen Yinwang Intelligent Technologies Co., Ltd., Shenzhen, Guangdong 518129 (CN)
(72) Inventor: HU, Haomang, Shenzhen, Guangdong 518129 (CN); WANG, Jinlong, Shenzhen, Guangdong 518129 (CN)
(74) Representative: Gill Jennings & Every LLP
(86) International application number: PCT/CN2022/102664
(87) International publication number: WO 2024/000354

(57) **Abstract**

A node upgrade method and apparatus are provided. The method includes: A software package set locally stored in a primary control node includes an upgrade software package for all secondary nodes; when a diagnosis request from an upper computer is received, a software package set is downloaded from the upper computer and split into one or more upgrade software packages based on a node identifier; and then the one or more upgrade software packages are distributed to all target nodes corresponding to node identifiers. The primary control node is responsible for splitting and identifying the target nodes, to implement simultaneous upgrade of all controllers. In other words, each vehicle enterprise does not need to define different diagnosis identifiers to distinguish between and manage and control the primary control node and the secondary nodes. This reduces workloads of the upper computer and the secondary nodes, and reduces research and development costs and production costs.

## Description

### TECHNICAL FIELD

This application relates to the field of vehicle diagnosis information technologies, and in particular, to a node upgrade method and apparatus.

### BACKGROUND

A vehicle diagnosis technology dates back to the 1960s. With an increasingly complex vehicle structure, especially rapid development of an intelligent driving technology, a requirement for online upgrade of each controller node is increasingly high. In this case, it is necessary to have a corresponding means for diagnosis to meet a requirement for vehicle maintenance. Unified Diagnostic Services (unified diagnosis service, UDS) is one of normalized standard protocols used in the vehicle industry to diagnose and locate faults. Different vehicle enterprises have different standards for UDS-based diagnosis and flashing of controllers. As a result, even if secondary nodes of a primary control node are designed to use parts of a same model, the parts cannot be directly used because the standards for UDS-based diagnosis and flashing of the different enterprises need to be matched.

Currently, the primary control node directly transparently transmits, to a lower-layer node, a flashing requirement sent by an upper computer of a vehicle enterprise. The primary control node and all the secondary nodes need to match different protocols for customized development, resulting in high development costs and a long development period.

### SUMMARY

This application provides a node upgrade method and apparatus, to reduce workloads of an upper computer and a secondary node, and reduce research and development costs and production costs.

According to a first aspect of this application, a node upgrade method is provided, including: receiving a diagnosis request from an upper computer; downloading a software package set from the upper computer based on the diagnosis request, where the software package set includes an upgrade software package for one or more secondary nodes, and each secondary node is in a one-to-one correspondence with a node identifier; determining an upgrade software package for a connected target node based on a node identifier of the target node, where the upgrade software package for the target node is included in the software package set; and sending the upgrade software package for the target node to the target node.

In the foregoing aspect, the upper computer does not control a part and version information of the secondary node, version upgrade information of the secondary node is reflected in the software package set, and a primary control node controls software package information. A design manufacturer of a control unit only needs to ensure that correct software of the primary control node and software of each secondary node are encapsulated in the software package, and does not need to perform separate part and version control. This reduces development costs. The primary control node may directly download the software package set from the upper computer, then split the software package set into an upgrade software package, and forward the upgrade software package to the target node, to implement simultaneous upgrade of controllers. In other words, each vehicle enterprise does not need to define different diagnosis IDs to distinguish between and manage and control the primary control node and the secondary nodes. This reduces workloads of the upper computer and the secondary nodes, and reduces research and development costs and production costs.

In a possible implementation, the method further includes: storing a current software package of the target node. After the sending the upgrade software package for the target node to the target node in the foregoing step, the method further includes: after the target node fails to be upgraded, sending the current software package to the target node and report error information, where the error information indicates that the target node fails to be upgraded.

In the foregoing possible implementation, the primary control node reserves code of the secondary node in a data downloading phase as a rollback backup area. Backup code of all the secondary nodes is reserved in memory space of the primary control node. After flashing of all the secondary nodes is completed, the primary control node clears the backup code. If flashing of a secondary node fails, the primary control node feeds back the specific node with a flashing error to the upper computer, and rolls back backup software of the failed secondary node, to ensure that the secondary node with a flashing failure has functional software, and prevent a breakdown phenomenon that a lower-layer node has no functional software because an original program of the lower-layer node is erased and flashing of a new version of software fails. This improves flashing reliability and ensures normal running of a control system.

In a possible implementation, after the sending the upgrade software package for the target node to the target node in the foregoing step, the method further includes: after the target node is successfully upgraded, clearing the current software package.

In the foregoing possible implementation, when the target node is successfully upgraded, the primary control node may directly delete the current software package stored in the rollback backup area, to save memory resources of the primary control node.

In a possible implementation, a first flag or a second flag is set for the current software package. The first flag indicates to send the current software package to the target node, and the second flag indicates to clear the current software package.

In a possible implementation, after the receiving a diagnosis request from an upper computer in the foregoing step, the method further includes: performing secure access verification with the upper computer; and/or performing secure access verification with the target node.

In the foregoing possible implementation, the target node does not need to interact with the upper computer. This reduces a matching workload of the secondary node.

In a possible implementation, after the sending the upgrade software package for the target node to the target node in the foregoing step, the method further includes: performing a post-programming phase, where the post-programming phase is used to restore a local communication status.

In the foregoing possible implementation, after reset of instructions that make the software take effect is completed, the post-programming phase starts. This phase is completely performed by the primary control node. A response is made to a service instruction from the upper computer; necessary reset work is completed; communication between the primary control node and other nodes is restarted; DTC is enabled; DTC is cleared; and a diagnosis session jumps, to restore a communication status of the primary control node. In this way, the primary control node can be used normally. The target node does not need to be developed by matching diagnosis and flashing standards of different vehicle enterprises. This reduces a development workload.

According to a second aspect of this application, a node upgrade method is provided, including: receiving a diagnosis request from an upper computer, where the diagnosis request includes a target identifier; feeding back, to the upper computer, version information of a target node corresponding to the target identifier; receiving an upgrade software package from the upper computer; and sending the upgrade software package to the target node.

In the foregoing aspect, a response made by the control node on behalf of the target node and necessary conversion of the information ensure freedom of the target node, so that the target node can be designed on a platform. In a programming phase, only a software package of the target node needs to be downloaded. During flashing of the target node, a primary control node needs to establish UDS communication with a single target node. This solution has a low requirement on memory for software storage, and reduces diagnosis and flashing load of the primary control node. After reset of instructions that make the software take effect is completed, a post-programming phase starts. This phase is completely performed by the primary control node. A response is made to a service instruction from the upper computer, and necessary reset work is completed. The target node does not need to be developed by matching UDS diagnosis and flashing standards of different vehicle enterprises.

In a possible implementation, the method further includes: storing a current software package of the target node. After the sending the upgrade software package for the target node to the target node in the foregoing step, the method further includes: after the target node fails to be upgraded, sending the current software package to the target node and reporting error information, where the error information indicates that the target node fails to be upgraded.

In a possible implementation, after the sending the upgrade software package for the target node to the target node in the foregoing step, the method further includes: after the target node is successfully upgraded, clearing the current software package.

In a possible implementation, a first flag or a second flag is set for the current software package. The first flag indicates to send the current software package to the target node, and the second flag indicates to clear the current software package.

In a possible implementation, after the receiving a diagnosis request from an upper computer in the foregoing step, the method further includes: performing secure access verification with the upper computer; and/or performing secure access verification with the target node.

In a possible implementation, after the sending the upgrade software package for the target node to the target node in the foregoing step, the method further includes: performing a post-programming phase, where the post-programming phase is used to restore a local communication status.

According to a third aspect of this application, a node upgrade apparatus is provided, to implement the method according to any one of the first aspect or the possible implementations of the first aspect. The apparatus includes a corresponding unit or module configured to perform the method. The unit or module included in the apparatus may be implemented by software and/or hardware. For example, the apparatus may be a network device, or may be a chip, a chip system, a processor, or the like that supports a network device in implementing the foregoing method, or may be a logic module or software that can implement all or some functions of a network device.

According to a fourth aspect of embodiments of this application, a node upgrade apparatus is provided, to implement the method according to any one of the second aspect or the possible implementations of the second aspect. The apparatus includes a corresponding unit or module configured to perform the method. The unit or module included in the apparatus may be implemented by software and/or hardware. For example, the apparatus may be a network device, or may be a chip, a chip system, a processor, or the like that supports a network device in implementing the foregoing method, or may be a logic module or software that can implement all or some functions of a network device.

According to a fifth aspect of this application, a computer device is provided, including a processor. The processor is coupled to a memory. The memory is configured to store instructions. When the instructions are executed by the processor, the computer device is enabled to implement the method according to any one of the first aspect or the possible implementations of the first aspect. The computer device may be, for example, a network device, or may be a chip or a chip system that supports a network device in implementing the foregoing method.

According to a sixth aspect of this application, a computer device is provided, including a processor. The processor is coupled to a memory. The memory is configured to store instructions. When the instructions are executed by the processor, the computer device is enabled to implement the method according to any one of the second aspect or the possible implementations of the second aspect. The computer device may be, for example, a network device, or may be a chip or a chip system that supports a network device in implementing the foregoing method.

According to a seventh aspect of this application, a computer-readable storage medium is provided. The computer-readable storage medium stores instructions. When the instructions are executed by a processor, the method provided in any one of the first aspect or the possible implementations of the first aspect and the second aspect or the possible implementations of the second aspect is implemented.

According to an eighth aspect of this application, a computer program product is provided. The computer program product includes computer program code. When the computer program code is executed on a computer, the method provided in any one of the first aspect or the possible implementations of the first aspect and the second aspect or the possible implementations of the second aspect is implemented.

According to a ninth aspect of this application, a terminal device is provided. The terminal device may be a vehicle or an electronic component, and the terminal device includes the apparatus according to the third aspect or the fourth aspect.

According to a tenth aspect of this application, a chip system is provided. The chip system includes a processor. The processor is coupled to a memory. The processor executes a computer program stored in the memory, to perform steps of the method according to any one of the first aspect or the possible implementations of the first aspect and the second aspect or the possible implementations of the second aspect. The chip system may be a single chip or a chip module including a plurality of chips.

### BRIEF DESCRIPTION OF DRAWINGS

FIG. 1 is a diagram of an architecture of a communication and transmission system according to an embodiment of this application;
FIG. 2 is a schematic flowchart of a node upgrade method according to an embodiment of this application;
FIG. 3 is a schematic flowchart of program upgrade according to an embodiment of this application;
FIG. 4 is a flowchart of another node upgrade method according to an embodiment of this application;
FIG. 5 is a schematic flowchart of other program upgrade according to an embodiment of this application;
FIG. 6 is a schematic diagram of a structure of a node upgrade apparatus according to an embodiment of this application;
FIG. 7 is a schematic diagram of a structure of another node upgrade apparatus according to an embodiment of this application;
FIG. 8 is a schematic diagram of a structure of another node upgrade apparatus according to an embodiment of this application;
FIG. 9 is a schematic diagram of a structure of another node upgrade apparatus according to an embodiment of this application; and
FIG. 10 is a schematic diagram of a structure of a computer device according to an embodiment of this application.

### DESCRIPTION OF EMBODIMENTS

Embodiments of this application provide a node upgrade method and apparatus, to reduce workloads of an upper computer and a secondary node, and reduce research and development costs and production costs.

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following first describes terms and concepts related to embodiments of this application.

### (1) Electronic control unit (electronic control unit, ECU)

The ECU is also referred to as an in-vehicle computer or a vehicle-mounted computer, or referred to as a dedicated microcomputer controller or dedicated single-chip microcomputer for a vehicle in terms of use. Similar to a common computer, the ECU includes a microprocessor (microcontroller Unit, MCU), a read-only memory (read-only memory, ROM), a random access memory (random access memory, RAM), an input/output interface (I/O), an analog-to-digital (A/D) converter, and a large-scale integrated circuit, for example, a shaping or drive circuit.

In the ECU, a central processing unit (central processing unit, CPU) is a core part, and has functions of computation and control. For example, when an engine is running, the CPU collects signals of all sensors for computation, and converts a result of computation into a control signal, to control work of a controlled object. The CPU further controls a memory (for example, the ROM), the I/O, and another external circuit. The ECU generally has functions of fault self-diagnosis and protection. When a fault occurs in a system, the ECU automatically records a fault code in the RAM, and takes a protection measure to read an alternative program from an inherent program, to maintain running of a corresponding component (for example, the engine). The fault information is displayed on a dashboard and remains unchanged. In this way, a vehicle owner can discover the fault in time and drive the vehicle to a repair shop. In a normal case, the RAM continuously records data during a driving process of the vehicle, and learns the data recorded in real time by using an adaptive program, to provide an optimal control status for the vehicle owner to adapt to a driving habit.

A conventional ECU has a simple structure, and an entire vehicle may have dozens of or hundreds of ECUs, for example, an ECU applied to an engine and an ECU applied to an antilock braking system. Functions of each ECU are independent. With development of a digital vehicle, especially an autonomous driving technology, ECUs on the vehicle gradually become complex and tend to be centralized on a super ECU, resulting in increasing difficulty in diagnosing the ECUs.

### (2) Upper computer

The upper computer is a computer device that may directly send a control command. In embodiments of this application, a computer device that can communicate with the ECU based on a UDS protocol may be referred to as an upper computer (which may also be referred to as a diagnostic instrument, a diagnostic machine, a diagnostic tool, or the like), for example, a smart handheld terminal device like a personal computer (personal computer, PC), a mobile phone, or a tablet computer, a smart wearable device like a smart band or a smart watch, or even a single-chip microcomputer, provided that the device can run corresponding diagnostic software. In addition, any device that can communicate with the ECU based on the UDS protocol may be used as the upper computer in embodiments of this application. This is not specifically limited herein.

### (3) Unified Diagnostic Services (unified diagnosis service, UDS)

Development, adjustment, implementation, and maintenance of different diagnostic communication protocols bring unnecessary costs to vehicle manufacturers, system suppliers, and ECU suppliers. To resolve this problem, different technical protocols and data communication principles are compiled into a standard defined by the international organization for standardization (international organization for standardization, ISO), which is usually referred to as UDS (which may also be referred to as ISO 14229-1). The UDS is a universal vehicle diagnosis protocol, and is irrelevant to a data link. The UDS is oriented to an application layer in an open systems interconnection (open systems interconnection, OSI) model, and may be implemented on different vehicle buses (for example, a controller area network (controller area network, CAN), a local area network (local interconnect network, LIN), FlexRay, an ethernet (ethernet), and a K-line (K-line)). Currently, most vehicle manufacturers use a UDS on CAN diagnosis protocol. To be specific, a set of instruments (usually referred to as an upper computer) is configured to analyze information and data inside an ECU of a current vehicle. A language used by the set of instruments to communicate with the ECU is the UDS (which is not the only method).

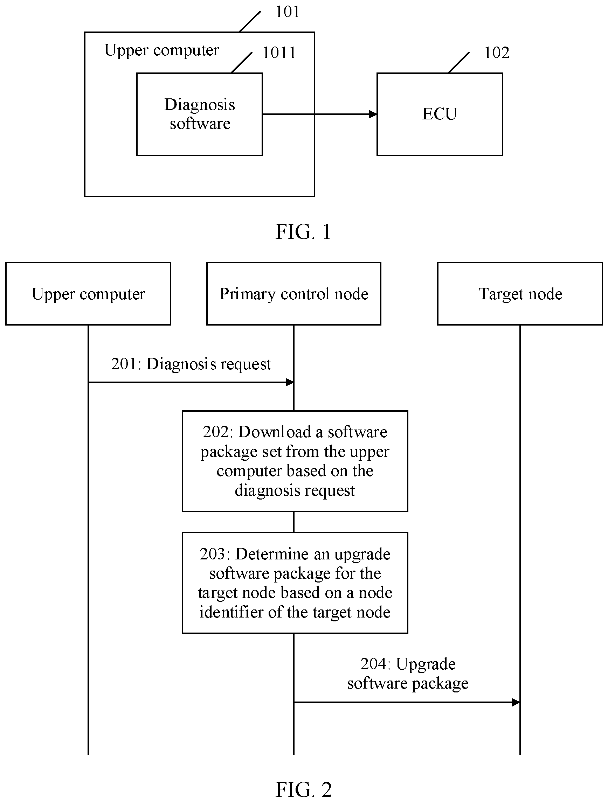

FIG. 1 is a diagram of an architecture of a communication and transmission system according to an embodiment of this application. The communication system includes an upper computer 101 and an ECU 102 (which may include one or more ECUs, and FIG. 1 shows a case of one ECU). Corresponding diagnosis software 1011 (such as a CAN development environment (CANopen environment, CANoe) or vehicle UDS test software) runs on the upper computer 101. With the diagnosis software, a corresponding diagnostic service can be implemented between the ECU 102 and the upper computer 101 based on the UDS. The diagnosis software 1011 may send a diagnosis request to the ECU 102. In the communication system provided in embodiments of this application, a request queue is no longer needed. The diagnosis request generated by the diagnosis software 1011 may be directly sent to the ECU 102, and the ECU 102 may upgrade software based on the diagnosis request.

With an increasingly complex vehicle structure, especially rapid development of an intelligent driving technology, a requirement for online upgrade of each controller node is increasingly high. In this case, it is necessary to have a corresponding means for diagnosis to meet a requirement for vehicle maintenance. Different vehicle enterprises have different standards for UDS-based diagnosis and flashing of controllers. As a result, even if secondary nodes of a primary control node are designed to use parts of a same model, the parts cannot be directly used because the standards for UDS-based diagnosis and flashing of the different enterprises need to be matched.

Currently, an ECU directly transparently transmits, to a secondary node, a flashing requirement sent by an upper computer of a vehicle enterprise. The ECU and all the secondary nodes need to match different protocols for customized development, resulting in high development costs and a long development period. The primary control node in embodiments of this application may be the ECU or any node that can implement a function of the ECU.

To resolve the foregoing problem, embodiments of this application provide a node upgrade method. The method is described as follows.

FIG. 2 is a schematic flowchart of the node upgrade method according to an embodiment of this application. The method includes the following steps.

Step 201: An upper computer sends a diagnosis request to a primary control node, and correspondingly, the primary control node receives the diagnosis request from the upper computer.

In this embodiment, corresponding diagnosis software (such as CANoe or vehicle UDS test software) runs on the upper computer. By using the diagnosis software, when a secondary node is connected to the primary control node, the upper computer may implement a corresponding diagnostic service based on UDS. First, the upper computer sends the diagnosis request to the primary control node, and the primary control node receives the diagnosis request.

The primary control node receives the diagnosis request in a pre-programming phase. To prohibit normal communication between secondary nodes and control a setting of a diagnostic trouble code (diagnostic trouble code, DTC), a non-default session mode needs to be enabled in the pre-programming phase. This is completed by using a diagnostic session control (10h) service whose session type is an extended session mode. This request is sent to all secondary nodes through functional addressing by using a single-frame request packet.

Secure access verification is used to ensure security of a flashing event and prevent software of a controller node from being maliciously tampered with. A common secure access mechanism is implemented by using a "seed" and a "key". A programming event needs to complete a secure access process. A secure access 27h service is mandatory in an emission-related and security system. Before an upgrade software package is downloaded, it is mandatory to complete a secure access process, to ensure that only an authorized diagnostic instrument can perform a download operation. In embodiments of this application, the primary control node separately performs secure access verification with the upper computer and the secondary node. The primary control node sends a seed to respond to a seed request packet from the upper computer, and compares whether a key in a key packet sent by the upper computer is consistent with a key stored (or computed) in the primary control node. Only when values are consistent, the primary control node determines access permission of the upper computer to a specific service and data of the primary control node and the secondary node of the primary control node. If development standards of some enterprises have a higher requirement on a security verification level, an internal 27h service verification step may be established between the primary control node and the secondary node. In this process, the primary control node serves as an upper computer, and establishes a secure access verification mechanism with a secondary node controller. Details are not described herein. This can also avoid a workload of multi-matching development of the secondary node.

Step 202: The primary control node downloads a software package set from the upper computer based on the diagnosis request, where the software package set includes an upgrade software package for one or more secondary nodes, and each secondary node is in a one-to-one correspondence with a node identifier.

In this embodiment, the upper computer does not control a part and version information of the secondary node, version upgrade information of the secondary node is reflected in the software package set, and the primary control node controls software package information. The software package set includes the upgrade software package for some or all the secondary nodes of the primary control node. The upper computer may indicate, by using the diagnosis request, the primary control node to simultaneously upgrade all the secondary nodes of the primary control node, or indicate, by using the diagnosis request, the primary control node to upgrade some secondary nodes of the primary control node. Each secondary node corresponds to a node identifier. For example, this may be implemented in a configuration manner. The node identifier represents the secondary node. For example, when the secondary node accesses the primary control node, the primary control node may configure a number for the secondary node, and the number represents the corresponding secondary node. Alternatively, the node identifier may be an address of the secondary node, an ID obtained through function division of the secondary node, or the like. This is not limited herein. The software package set may also include an upgrade software package for the primary control node. The primary control node may directly download the software package set from the upper computer, split the software package set into an upgrade software package, and forward the upgrade software package to a target node, to upgrade software of the secondary node, or simultaneously upgrade software of the secondary node and software of the primary control node. For example, in the pre-programming phase, information related to the secondary node is confirmed. The upper computer does not control the part and the version information of the secondary node. Version upgrade information of all the secondary nodes is reflected in the software package set locally packed by the primary control node. The primary control node controls the software package information, and indicates, by using only one group of diagnosis IDs, all the secondary nodes in the software package set to upgrade software.

Step 203: The primary control node determines the upgrade software package for the target node based on a node identifier of the target node, where the upgrade software package for the target node is included in the software package set.

In this embodiment, after receiving the diagnosis request, the primary control node may determine that the secondary node needs to be upgraded, and the primary control node can divide the software package set into the upgrade software package based on the node identifier. In other words, the software package set is divided into one or more upgrade software packages. A flag is stored in a header or a packet trailer of the upgrade software package in the software package set, the flag is in a correspondence with the node identifier. The correspondence is stored in the primary control node. In other words, when receiving the software package set, the primary control node may parse the upgrade software package in the software package set, to obtain the flag in the upgrade software package, so as to determine a correspondence between the upgrade software package and the secondary node, based on the correspondence between the flag and the node identifier, and then splits the software package set. In another manner, the flag in the upgrade software package may alternatively directly indicate the secondary node. This is not limited herein.

The upgrade software package corresponding to the target node is one of the one or more upgrade software packages obtained through division. The primary control node may determine, based on the node identifier of the target node, the upgrade software package for the target node from the foregoing upgrade software package obtained through division.

Step 204: The primary control node sends the upgrade software package for the target node to the target node.

In this embodiment, the primary control node may send the determined upgrade software package to the corresponding target node. The primary control node implements software upgrade of the target node based on a current UDS diagnosis and flashing standard, and the target node does not need to match the UDS diagnosis and flashing standard.

A bootloader (bootloader) of the primary control node establishes communication with UDS of the secondary node, first downloads flash drivers (FlashDrivers) of all the secondary nodes to memory space allocated by the primary control node, forwards the flash drivers to the target node based on an address identifier, then downloads application (application, APP) software of all the secondary nodes to the memory space allocated by the primary control node, and forwards the APP to the target node based on the address identifier. In this step, extra memory space needs to be occupied on the primary control node, but flashing reliability is high. If memory space for current diagnosis and flashing is insufficient, segment data for the target node may not be stored and may be directly forwarded to the corresponding target node. This saves the memory space. However, in this case, the flashing reliability is lower, and there is a risk of a flashing failure. In a development process, different enterprises may evaluate advantages and disadvantages of solutions based on the actual situation, and select an appropriate solution.

When the software package set includes the upgrade software package for the primary control node, the primary control node may also download a FlashDriver and an APP of the primary control node to corresponding memory space of the primary control node, to upgrade software of the primary control node.

After the primary control node successfully forwards the software of all the secondary nodes, the secondary nodes stop sending online device requests after completing flashing, and send positive responses to the primary control node. The primary control node positively responds to the upper computer, and the upper computer sends, to the primary control node, an instruction indicating to perform a programming dependency check. Then, the primary control node performs the programming dependency check, and responds for the programming dependency check on behalf of the secondary nodes.

After flashing is completed, the upper computer sends an 11h service instruction to the primary control node, and the primary control node forwards the 11h service instruction to the secondary nodes, to reset the secondary nodes to make the software take effect. When software of the primary control node and the software of secondary nodes are simultaneously upgraded, the primary control node and the secondary nodes can be simultaneously reset, or the primary control node can be reset later than the secondary nodes. In this way, when the secondary nodes jump out from the bootloader after reset, the secondary nodes do not need to jump from the APP again to complete software reset of all controllers.

In an upgrade performing process, the primary control node needs to disconnect from another node and stop DTC to prevent a communication error and a DTC error. After the secondary nodes are reset, the upper computer may send instructions indicating the primary control node to perform a post-programming phase, restart communication between the primary control node and other nodes, enable the DTC, clear the DTC, and jumps a diagnosis session, to restore a communication status of the primary control node, so that the primary control node can be used normally.

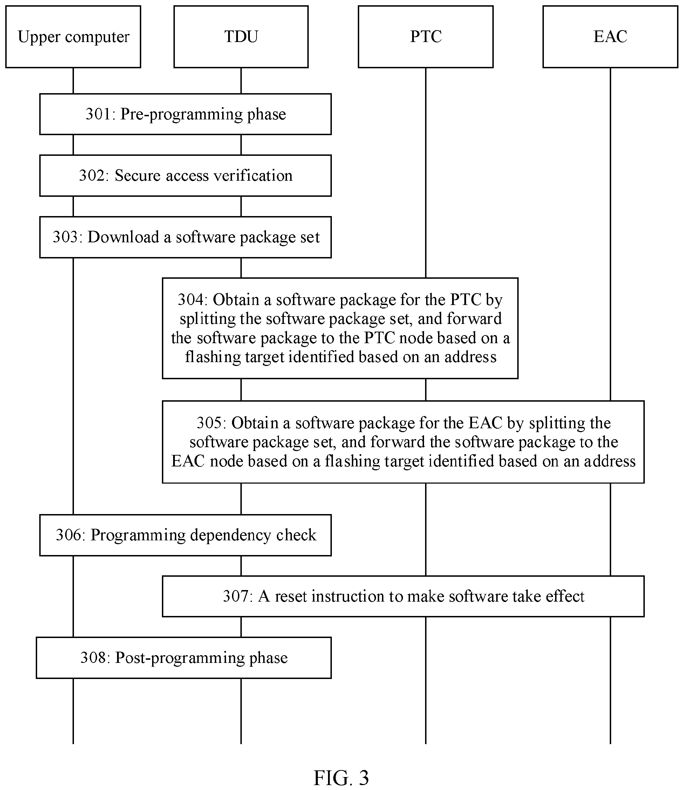

For example, refer to a schematic flowchart of program upgrade shown in FIG. 3. For example, in an embodiment of this application, a primary control node is a thermal system drive unit (thermal drive unit, TDU) in an ECU, and secondary nodes of the TDU are a positive temperature coefficient (positive temperature coefficient, PTC) and an electric air-conditioning compressor (electric air-conditioning compressor, EAC). The solution mainly includes the following several core steps. Step 301: a pre-programming step: The TDU packs version upgrade information of the PTC and the EAC, and the TDU further receives a diagnosis request from an upper computer and feeds back version information of the PTC and the EAC to the upper computer. Step 302: The TDU performs secure access verification with the upper computer. Step 303: The TDU downloads a software package set from the upper computer. Step 304: Obtain a software package for the PTC by splitting the software package set, and forward the software package to the PTC node based on a flashing target identified based on an address. Step 305: Obtain a software package for the EAC by splitting the software package set, and forward the software package to the EAC node based on the flashing target identified based on the address. Step 306: The TDU performs a programming dependency check based on an instruction from the upper computer. Step 307: The TDU delivers a reset instruction to make software take effect. Step 308: The TDU performs a post-programming phase based on an instruction from the upper computer. A sequence of performing step 304 and step 305 is not specified.

Because a secondary node may not be upgraded successfully when software is upgraded, to avoid impact on running of the secondary node, dedicated memory space may be allocated on the primary control node as a rollback backup area to store a current software package of the secondary node. For example, after determining an upgrade software package corresponding to a target node, the primary control node may copy a current software package of the target node and store the current software package in the rollback backup area, and then send the upgrade software package for the target node to the target node. When a problem occurs during upgrade of the target node, the primary control node may provide the stored current software package for the target node to perform software rollback, and then generate error information and report the error information to the upper computer, to prompt that the target node fails to be upgraded. The primary control node reserves code of the secondary node in a data downloading phase as the rollback backup area. Backup code of all the secondary nodes is reserved in memory space of the primary control node. After flashing of all the secondary nodes is completed, the primary control node clears the backup code. If flashing of a secondary node fails, the primary control node feeds back the specific node with a flashing error to the upper computer, and rolls back backup software of the failed secondary node, to ensure that the secondary node with a flashing failure has functional software, and prevent a breakdown phenomenon that a lower-layer node has no functional software because an original program of the lower-layer node is erased and flashing of a new version of software fails. This improves flashing reliability and ensures normal running of a control system.

When the target node is successfully upgraded, the primary control node may directly delete the current software package stored in the rollback backup area, to save memory resources of the primary control node.

In embodiments of this application, the primary control node may further set a flag bit in the rollback backup area as a signpost, and indicate, by using a first flag on the flag bit, the primary control node to send the current software package to the target node, or indicate, by using a second flag, the primary control node to delete the current software package, to improve performing efficiency.

In embodiments of this application, the upper computer does not control a part and version information of the secondary node, version upgrade information of the secondary node is reflected in the software package set packed by the primary control node, and the primary control node controls software package information. A design manufacturer of a control unit only needs to ensure that correct software of the primary control node and software of each secondary node are encapsulated in the software package, and does not need to perform separate part and version control. This reduces development costs. The primary control node is responsible for splitting and identifying the target node and establishing UDS communication with the secondary nodes, to implement simultaneous upgrade of controllers. In other words, each vehicle enterprise does not need to define different diagnosis IDs to distinguish between and manage and control the primary control node and the secondary nodes. This reduces workloads of the upper computer and the secondary nodes, and reduces research and development costs and production costs.

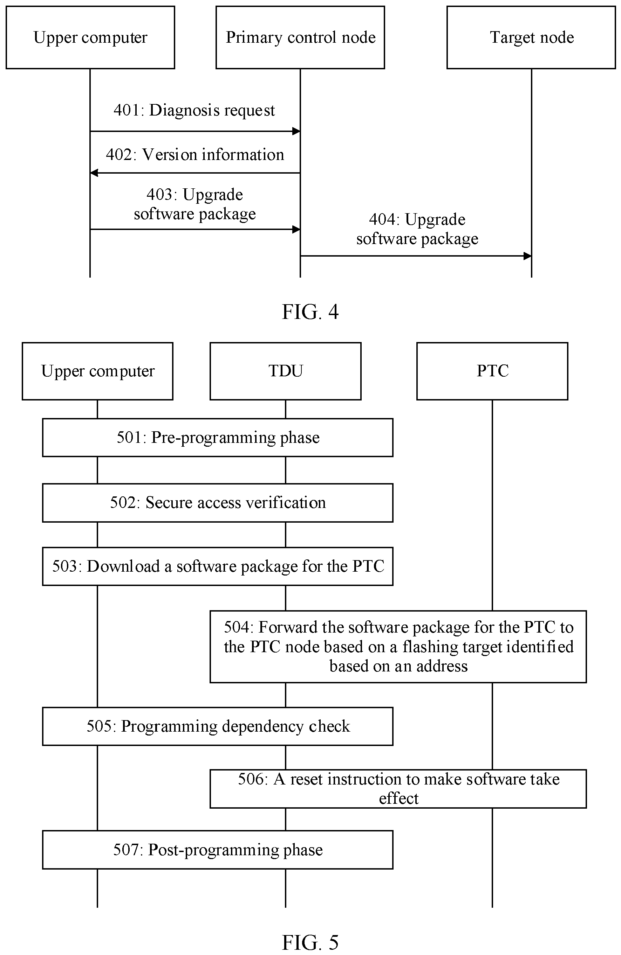

The foregoing describes a case in which the primary control node stores the upgrade software packages of all the secondary nodes. The following describes a scenario in which the primary control node does not store the upgrade software packages of all the secondary nodes. FIG. 4 is a flowchart of another node upgrade method according to an embodiment of this application. The method is described as follows.

Step 401: An upper computer sends a diagnosis request to a primary control node, and correspondingly, the primary control node receives the diagnosis request from the upper computer, where the diagnosis request includes a target identifier.

In this embodiment, corresponding diagnosis software (such as CANoe or vehicle UDS test software) runs on the upper computer. By using the diagnosis software, when a secondary node is connected to the primary control node, the upper computer may implement a corresponding diagnostic service based on UDS. The upper computer may perform the diagnostic service for a target node in the secondary node of the primary control node. First, the upper computer sends the diagnosis request to the primary control node, and the primary control node receives the diagnosis request. In this case, the diagnosis request includes the target identifier indicating the target node.

After receiving the diagnosis request from the upper computer, the primary control node separately performs secure access verification with the upper computer and the secondary node. The primary control node sends a seed to respond to a seed request packet from the upper computer, and compares whether a key in a key packet sent by the upper computer is consistent with a key stored (or computed) in the primary control node. Only when values are consistent, the primary control node determines access permission of the upper computer to a specific service and data of the primary control node and the secondary node of the primary control node. If development standards of some enterprises have a higher requirement on a security verification level, an internal 27h service verification step may be established between the primary control node and the secondary node. In this process, the primary control node serves as an upper computer, and establishes a secure access verification mechanism with a secondary node controller. Details are not described herein. This can also avoid a workload of multi-matching development of the secondary node.

Step 402: The primary control node sends version information of the target node corresponding to the target identifier to the host computer.

For example, the version information may include one or more of a part number, a software version number, and a hardware version number of the secondary node. Version information of all secondary nodes is stored in the primary control node, and the primary control node responds to a 22h service instruction from the upper host computer. In other words, the primary control node may feed back a software version and a hardware version of the target node to the upper computer, and the secondary node does not need to interact with the upper computer.

Step 403: The upper computer sends an upgrade software package to the primary control node, and correspondingly, the primary control node receives the upgrade software package from the upper computer.

In this embodiment, after receiving the version information of the target node from the primary control node, the upper computer may directly deliver the upgrade software package to the primary control node. This can not only implement control over the version information of the secondary node, but also avoid a workload of multi-matching development of the secondary node.

Step 404: The primary control node sends the upgrade software package to the target node, where the target node corresponds to the target identifier.

In this embodiment, for step 404, refer to the related descriptions of step 204 in the method embodiment shown in FIG. 2. Details are not described herein again.

For example, refer to a schematic flowchart of program upgrade shown in FIG. 5. For example, in an embodiment of this application, a primary control node is a TDU in an ECU, secondary nodes of the TDU are a PTC and an EAC, and there may be one or more target nodes. Herein, the target node is the PTC. The solution mainly includes the following several core steps. Step 501: a pre-programming step: The TDU stores one or more of a part number, a software version number, and a hardware version number of a secondary node, and the TDU further receives a diagnosis request from an upper computer and feeds back version information of the PTC to the upper computer. Step 502: The TDU performs secure access verification with the upper computer. Step 503: The TDU downloads a software package of the PTC from the upper computer. Step 504: The TDU forwards the software package of the PTC to the PTC node based on a target node identified based on an address. Step 505: The TDU performs a programming dependency check based on an instruction from the upper computer, and responds to the check on behalf of the PTC. Step 506: The TDU delivers a reset instruction to make software take effect. Step 507: The TDU performs a post-programming phase based on an instruction from the upper computer.

Because a secondary node may not be upgraded successfully when software is upgraded, to avoid impact on running of the secondary node, dedicated memory space may be allocated in the primary control node as a rollback backup area to store software code of the target node. When flashing fails, the rollback backup area is used. For details, refer to the related descriptions of the rollback backup area in the method embodiment in FIG. 2, and details are not described herein again. This can prevent a breakdown phenomenon that the target node has no functional software because an original program of the target node is erased and flashing of a new version of software fails, thereby improving flashing reliability and ensuring normal running of a control system.

When the target node is successfully upgraded, the primary control node may directly delete the current software package stored in the rollback backup area, to save memory resources of the primary control node.

In embodiments of this application, the primary control node may further set a flag bit in the rollback backup area as a signpost, and indicate, by using a first flag on the flag bit, the primary control node to send the current software package to the target node, or indicate, by using a second flag, the primary control node to delete the current software package, to improve performing efficiency.

In a pre-programming phase, the primary control node performs the pre-programming step, and stores one or more pieces of information such as part numbers, hardware version numbers, and software version numbers of all secondary node controllers in the primary control node. This design greatly reduces a constraint of a vehicle enterprise on a secondary node controller. As a result, for control systems of different vehicle enterprises, the secondary node controllers may use same internal models, and the primary control node is responsible for mapping the internal models to corresponding number formats required by the vehicle enterprises. A response made by the control node on behalf of the target node and necessary conversion of the information ensure freedom of the target node, so that the target node can be designed on a platform. In a programming phase, only a software package of the target node needs to be downloaded. During flashing of the target node, the primary control node needs to establish UDS communication with a single target node. This solution has a low requirement on memory for software storage, and reduces diagnosis and flashing load of the primary control node. After reset of instructions that make the software take effect is completed, a post-programming phase starts. This phase is completely performed by the primary control node. A response is made to a service instruction from the upper computer, and necessary reset work is completed. The target node does not need to be developed by matching UDS diagnosis and flashing standards of different vehicle enterprises.

The foregoing describes the node upgrade method, and the following describes an apparatus for performing the method.

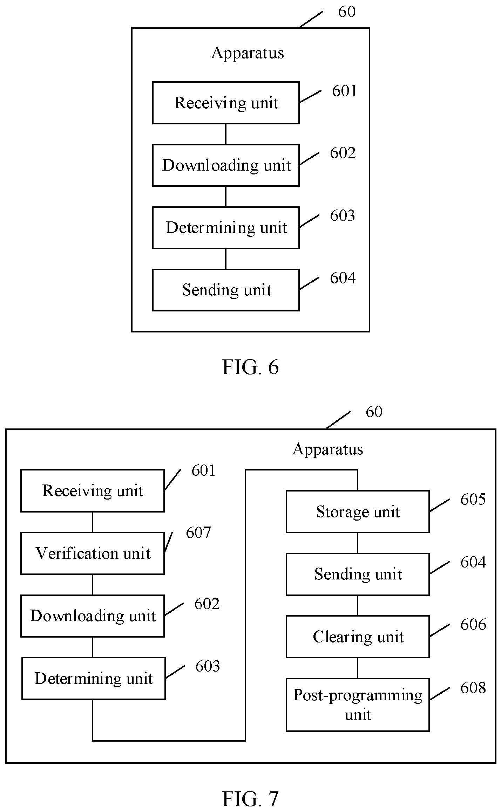

FIG. 6 is a schematic diagram of a structure of a node upgrade apparatus according to an embodiment of this application. The apparatus 60 includes:
a receiving unit 601, configured to receive a diagnosis request from an upper computer;
a downloading unit 602, configured to download a software package set from the upper computer based on the diagnosis request, where the software package set includes an upgrade software package for one or more secondary nodes, and each secondary node is in a one-to-one correspondence with a node identifier;
a determining unit 603, configured to determine an upgrade software package for a connected target node based on a node identifier of the target node, where the upgrade software package for the target node is included in the software package set; and
a sending unit 604, configured to send the upgrade software package for the target node to the target node.

The receiving unit 601 of the apparatus 60 is configured to perform step 201 in the method embodiment in FIG. 2. The downloading unit 602 of the apparatus 60 is configured to perform step 202 in the method embodiment in FIG. 2. The determining unit 603 of the apparatus 60 is configured to perform step 203 in the method embodiment in FIG. 2. The sending unit 604 of the apparatus 60 is configured to perform step 204 in the method embodiment in FIG. 2. Details are not described herein again.

Further, refer to a schematic diagram of a structure of another node upgrade apparatus shown in FIG. 7. The apparatus 60 may further include a storage unit 605. The storage unit 605 is specifically configured to store a current software package of the target node.

The sending unit 604 is further configured to: after the target node fails to be upgraded, send the current software package to the target node, and report error information. The error information indicates that the target node fails to be upgraded.

Optionally, the apparatus 60 further includes a clearing unit 606. The clearing unit 606 is specifically configured to clear the current software package after the target node is successfully upgraded.

Optionally, a first flag or a second flag is set for the current software package. The first flag indicates to send the current software package to the target node, and the second flag indicates to clear the current software package.

Optionally, the apparatus 60 further includes a verification unit 607. The verification unit 607 is specifically configured to: perform secure access verification with the upper computer, and/or perform secure access verification with the target node.

Optionally, the apparatus 60 further includes a post-programming unit 608. The post-programming unit 608 is specifically configured to perform a post-programming phase. The post-programming phase is used to restore a local communication status.

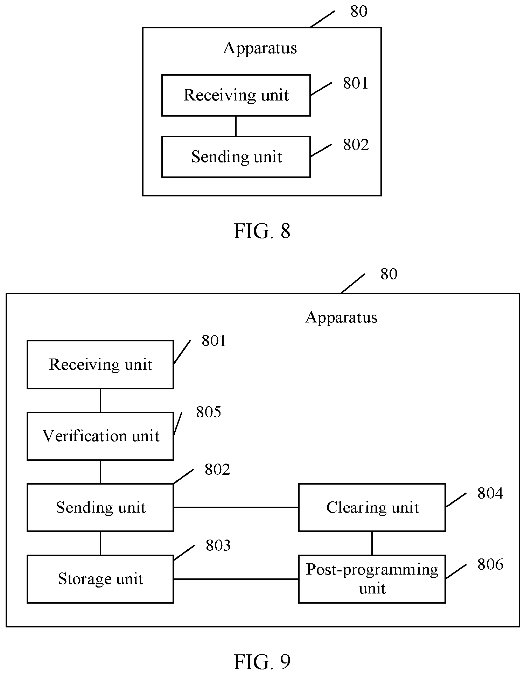

FIG. 8 is a schematic diagram of a structure of another node upgrade apparatus according to an embodiment of this application. The apparatus 80 includes:
a receiving unit 801, configured to receive a diagnosis request from an upper computer, where the diagnosis request includes a target identifier; and
a sending unit 802, configured to send, to the upper computer, version information of a target node corresponding to the target identifier.

The receiving unit 801 is further configured to receive an upgrade software package from the upper computer.

The sending unit 802 is further configured to send the upgrade software package to the target node. The target node corresponds to the target identifier.

The receiving unit 801 of the apparatus 80 is configured to perform step 401 and step 403 in the method embodiment in FIG. 4. The sending unit 802 of the apparatus 80 is configured to perform step 402 and step 204 in the method embodiment in FIG. 4. Details are not described herein again.

Further, refer to a schematic diagram of a structure of another node upgrade apparatus shown in FIG. 9. The apparatus 80 may further include a storage unit 803. The storage unit 803 is specifically configured to store a current software package of the target node. The sending unit 802 is further configured to send the current software package to the target node after the target node fails to be upgraded.

Optionally, the apparatus 80 further includes a clearing unit 804. The clearing unit 804 is specifically configured to clear the current software package after the target node is successfully upgraded.

Optionally, a first flag or a second flag is set for the current software package. The first flag indicates to send the current software package to the target node, and the second flag indicates to clear the current software package.

Optionally, the apparatus 80 further includes a verification unit 805. The verification unit 805 is specifically configured to: perform secure access verification with an upper computer, and/or perform secure access verification with the target node.

Optionally, the apparatus 80 further includes a post-programming unit 806. The post-programming unit 806 is specifically configured to perform a post-programming phase. The post-programming phase is used to restore a local communication status.

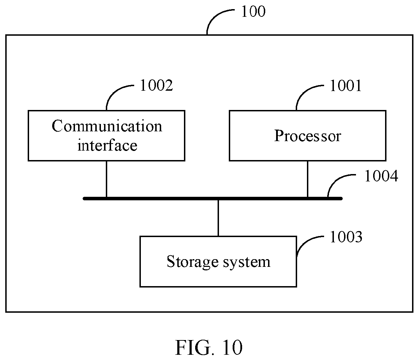

FIG. 10 is a schematic diagram of a possible logical structure of a computer device 100 according to an embodiment of this application. The computer device 100 includes a processor 1001, a communication interface 1002, a storage system 1003, and a bus 1004. The processor 1001, the communication interface 1002, and the storage system 1003 are connected to each other through the bus 1004. In an embodiment of this application, the processor 1001 is configured to control and manage an action of the computer device 100. For example, the processor 1001 is configured to perform the steps performed by the primary control node in the method embodiment in FIG. 2 or FIG. 4. The communication interface 1002 is configured to support the computer device 100 for communication. The storage system 1003 is configured to store program code and data of the computer device 100.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1001 may be a combination of processors implementing a computing function, for example, a combination of one or more microprocessors, or a combination of a digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

The receiving unit 601 and the sending unit 604 in the apparatus 60 are equivalent to the communication interface 1002 in the computer device 100. The downloading unit 602 and the determining unit 603 in the apparatus 60 are equivalent to the processor 1001 in the computer device 100.

The receiving unit 801 and the sending unit 802 in the apparatus 80 are equivalent to the communication interface 1002 in the computer device 100.

The computer device 100 in this embodiment may correspond to the primary control node in the method embodiment in FIG. 2 or FIG. 4. The communication interface 1002 in the computer device 100 may implement functions and/or various steps implemented by the primary control node in the method embodiment in FIG. 2 or FIG. 4. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing apparatuses may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, the units may be integrated and implemented in a form of system-on-a-chip (system-on-a-chip, SOC).

According to another embodiment of this application, a computer-readable storage medium is further provided. The computer-readable storage medium stores computer-executable instructions. When a processor of a device executes the computer-executable instructions, the device performs the method performed by the primary control node in the foregoing method embodiments.

According to another embodiment of this application, a computer program product is further provided. The computer program product includes computer-executable instructions, and the computer-executable instructions are stored in a computer-readable storage medium. When a processor of a device executes the computer-executable instructions, the device performs a method performed by the primary control node in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the division into units is merely logical function division and may be other division in practice. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A node upgrade method, comprising:
receiving a diagnosis request from an upper computer;
downloading a software package set from the upper computer based on the diagnosis request, wherein the software package set comprises an upgrade software package for one or more secondary nodes, and each secondary node is in a one-to-one correspondence with a node identifier;
determining an upgrade software package for a target node based on a node identifier of the target node, wherein the upgrade software package for the target node is comprised in the software package set; and
sending the upgrade software package for the target node to the target node.

2. The method according to claim 1, wherein the method further comprises:
storing a current software package of the target node; and
after the sending the upgrade software package for the target node to the target node, the method further comprises:
after the target node fails to be upgraded, sending the current software package to the target node and reporting error information, wherein the error information indicates that the target node fails to be upgraded.

3. The method according to claim 2, wherein after the sending the upgrade software package for the target node to the target node, the method further comprises:
after the target node is successfully upgraded, clearing the current software package.

4. The method according to claim 3, wherein a first flag or a second flag is set for the current software package, the first flag indicates to send the current software package to the target node, and the second flag indicates to clear the current software package.

5. The method according to any one of claims 1 to 4, wherein after the receiving a diagnosis request from an upper computer, the method further comprises:
performing secure access verification with the upper computer; and/or
performing secure access verification with the target node.

6. The method according to any one of claims 1 to 5, wherein after the sending the upgrade software package for the target node to the target node, the method further comprises:
performing a post-programming phase, wherein the post-programming phase is used to restore a local communication status.

7. A node upgrade method, comprising:
receiving a diagnosis request from an upper computer, wherein the diagnosis request comprises a target identifier;
feeding back, to the upper computer, version information of a target node corresponding to the target identifier;
receiving an upgrade software package from the upper computer; and
sending the upgrade software package to the target node.

8. The method according to claim 7, wherein the method further comprises:
storing a current software package of the target node; and
after the sending the upgrade software package to the target node, the method further comprises:
after the target node fails to be upgraded, sending the current software package to the target node.

9. The method according to claim 8, wherein after the sending the upgrade software package to the target node, the method further comprises:
after the target node is successfully upgraded, clearing the current software package.

10. The method according to claim 9, wherein a first flag or a second flag is set for the current software package, the first flag indicates to send the current software package to the target node, and the second flag indicates to clear the current software package.

11. The method according to any one of claims 7 to 10, wherein the method further comprises:
performing secure access verification with the upper computer;
and/or
performing secure access verification with the target node.

12. The method according to any one of claims 7 to 11, wherein after the sending the upgrade software package to the target node, the method further comprises:
performing a post-programming phase, wherein the post-programming phase is used to restore a local communication status.

13. A node upgrade apparatus, comprising:
a receiving unit, configured to receive a diagnosis request from an upper computer;
a downloading unit, configured to download a software package set from the upper computer based on the diagnosis request, wherein the software package set comprises an upgrade software package for one or more secondary nodes, and each secondary node is in a one-to-one correspondence with a node identifier;
a determining unit, configured to determine an upgrade software package for a connected target node based on a node identifier of the target node, wherein the upgrade software package for the target node is comprised in the software package set; and
a sending unit, configured to send the upgrade software package for the target node to the target node.

14. The apparatus according to claim 13, wherein the apparatus further comprises a storage unit, and the storage unit is specifically configured to:
store a current software package of the target node; and
the sending unit is further configured to:
after the target node fails to be upgraded, send the current software package to the target node and report error information, wherein the error information indicates that the target node fails to be upgraded.

15. The apparatus according to claim 14, wherein the apparatus further comprises a clearing unit, and the clearing unit is specifically configured to:
after the target node is successfully upgraded, clear the current software package.

16. The apparatus according to claim 15, wherein a first flag or a second flag is set for the current software package, the first flag indicates to send the current software package to the target node, and the second flag indicates to clear the current software package.

17. The apparatus according to any one of claims 13 to 16, wherein the apparatus further comprises a verification unit, and the verification unit is specifically configured to:
perform secure access verification with the upper computer;
and/or
perform secure access verification with the target node.

18. The apparatus according to any one of claims 13 to 17, wherein the apparatus further comprises a post-programming unit, and the post-programming unit is specifically configured to:
perform a post-programming phase, wherein the post-programming phase is used to restore a local communication status.

19. A node upgrade apparatus, comprising:
a receiving unit, configured to receive a diagnosis request from an upper computer, wherein the diagnosis request comprises a target identifier; and
a sending unit, configured to send, to the upper computer, version information of a target node corresponding to the target identifier; and
the receiving unit is further configured to receive an upgrade software package from the upper computer; and
the sending unit is further configured to send the upgrade software package to the target node.

20. The apparatus according to claim 19, wherein the apparatus further comprises a storage unit, and the storage unit is specifically configured to:
store a current software package of the target node; and
the sending unit is further configured to:
after the target node fails to be upgraded, send the current software package to the target node.

21. The apparatus according to claim 20, wherein the apparatus further comprises a clearing unit, and the clearing unit is specifically configured to:
after the target node is successfully upgraded, clear the current software package.

22. The apparatus according to claim 21, wherein a first flag or a second flag is set for the current software package, the first flag indicates to send the current software package to the target node, and the second flag indicates to clear the current software package.

23. The apparatus according to any one of claims 19 to 22, wherein the apparatus further comprises a verification unit, and the verification unit is specifically configured to:
perform secure access verification with the upper computer;
and/or
perform secure access verification with the target node.

24. The apparatus according to any one of claims 19 to 23, wherein the apparatus further comprises a post-programming unit, and the post-programming unit is specifically configured to:
perform a post-programming phase, wherein the post-programming phase is used to restore a local communication status.

25. A computer device, comprising a processor, wherein the processor is coupled to a memory;
and
the processor is configured to execute instructions stored in the memory, to enable the computer device to perform the method according to any one of claims 1 to 6.

26. A computer device, comprising a processor, wherein the processor is coupled to a memory;
and
the processor is configured to execute instructions stored in the memory, to enable the computer device to perform the method according to any one of claims 7 to 12.

27. A computer-readable storage medium, wherein the computer-readable storage medium stores instructions, and when the instructions are executed by a processor, the method according to any one of claims 1 to 12 is implemented.

28. A computer program product, wherein the computer program product comprises computer program code, and when the computer program code is run on a computer, the method according to any one of claims 1 to 12 is implemented.

29. A terminal device, wherein the terminal device comprises the apparatus according to any one of claims 13 to 24.
